# EUROPÄISCHE PATENTSCHRIFT

(11) **EP 3 529 109 B1**
(45) Veröffentlichungstag und Bekanntmachung des Hinweises auf die Patenterteilung: **10.06.2020**
(21) Anmeldenummer: 18714435.7
(22) Anmeldetag: 12.03.2018
(51) Int. Cl.: B60R 21/017

(54) **VERFAHREN ZUM AUSLÖSEN EINER MEHRZAHL VON AKTOREN EINES SICHERHEITSSYSTEMS EINES KRAFTFAHRZEUGS AUS EINER ENERGIEQUELLE**
METHOD FOR TRIGGERING A PLURALITY OF ACTUATORS OF A SAFETY SYSTEM OF A MOTOR VEHICLE FROM AN ENERGY SOURCE
PROCÉDÉ DE DÉCLENCHEMENT DE PLUSIEURS ACTIONNEURS D'UN SYSTÈME DE SÉCURITÉ D'UN VÉHICULE À MOTEUR À PARTIR D'UNE SOURCE D'ÉNERGIE

(30) Priorität: 05.05.2017 DE 102017207578
(43) Veröffentlichungstag der Anmeldung: 28.08.2019
(73) Patentinhaber: Continental Automotive GmbH, 30165 Hannover (DE)
(72) Erfinder: MELZL, Hubert, 93083 Obertraubling (DE); ERTL, Ludwig, 93077 Bad Abbach / Peising (DE); FUTTERLIEB, Ernst, 93049 Regensburg (DE)
(74) Vertreter: Büchner, Jörg
(86) Internationale Anmeldenummer: PCT/DE2018/200024
(87) Internationale Veröffentlichungsnummer: WO 2018/202255

(56) Entgegenhaltungen:
- DE-A1- 19 627 877
- DE-A1-102007 055 123
- DE-C1- 19 917 340

## Beschreibung

Die Erfindung betrifft ein Verfahren zum Auslösen einer Mehrzahl von Aktoren eines Sicherheitssystems eines Kraftfahrzeugs aus einer Energiequelle gemäß dem Oberbegriff von Anspruch 1.

Die Zündmittel werden dabei üblicher Weise aus einer Energiequelle gezündet. Dazu ist neben einem Bordnetz und zudem zumindest ein Autarkiekondensator vorgesehen, wobei der bzw. die Autarkiekondensator(en) aus dem Bordnetz aufgeladen werden, evtl. auch auf eine gegenüber dem Spannungswert auf dem Bordnetz höheren Wert.

Der Zündpfad verläuft dabei in der Regel über einen zentralen Safingtransistor, zündkreisspezifische Highsideschalter, das Zündmittel und zündkreisspezifische Lowsideschalter zurück über die Fahrzeugmasse. Der Auslösezeitpunkt wird durch einen Crasherkennungsalgorithmus entschieden. Die Anzahl der anzusteuernden Zündmittel geht in diese Entscheidung nicht ein. Entsprechend wird die Schaltung dafür ausgelegt, alle Zündmittel gleichzeitig auslösen zu können.

Während bei einer geringen Anzahl von Zündmitteln ein zeitlich gestaffeltes Auslösen von Rückhaltemitteln nicht notwendig ist, da die Grundauslegung ein gleichzeitiges Auslösen abdeckt, ist bei einer steigenden Anzahl von Zündmitteln dies nur noch mit erheblichem Mehraufwand darstellbar. Deshalb werden dann die Zündmittel in Gruppen gestaffelt ausgelöst.

Darüber hinaus ist beispielsweise aus der DE 19627877 A1 ein Verfahren zur Auslösung eines passiven Insassen-Schutzsystems für Kraftfahrzeuge bekannt, bei dem wenigstens ein elektrisches Zündmittel für eine Person im Falle eines gefährlichen Aufpralls schützendes Mittel, insbesondere Airbag, Gurtstraffer, zur Zuführung von Zündenergie mit einem Auslösestrom beaufschlagt wird, der bei Funktionsstörungen des Bordnetzes des Kraftfahrzeuges als Endladestrom eines Autarkiekondensators erzeugt wird. Dieser Autarkiekondensator stellt dabei für mehrere Zündmittel gleichzeitig die Auslöseströme zur Verfügung, wobei der Auslösestrom eines jeden Zündmittels derart pulsweitenmoduliert wird, dass die für das jeweilige Zündmittel erforderliche Zündenergie über das Puls-Pausenverhältnis des Auslösestroms eingestellt wird.

Zudem beschreibt die DE 19917340 C1 eine Vorrichtung zum Auslösen von Insassenschutzmitteln eines Kraftfahrzeugs mit mehreren Zündkreisen sowie einem Steuergerät zum Erzeugen eines Auslösealgorithmus auf Basis von Sensorsignalen und zum Steuern auf Basis des Auslösealgorithmus und einem Energiespeicher zum Versorgen der Zündkreise mit Energie, bei welchem durch den Energiespeicher nur Energie für einen Teil der Zündkreise bereitgestellt wird und die Energie je Zündkreis abhängig von vorgegebenen Prioritäten ist, falls die Energiereserve nicht für alle zu zündenden Zündkreise ausreicht.

Aus der WO 2015117581 A1 ist bereits ein Verfahren bekannt, wobei dort unabhängig von der Frage einer evtl. Zerstörung des Bordnetzes eine maximale Gruppengröße von Aktoren zur Auslösung innerhalb eines Zeitfensters vorgegeben ist und für aufeinanderfolgende Zeitfenster jeweils individuelle, zumindest teils unterschiedliche maximale Gruppengrößen vorgegeben sind und die maximale Gruppengröße für das jeweilige Zeitfenster adaptiv anhand der in vorangehenden Zeitfenstern tatsächlich bereits ausgelösten Aktoren bestimmt wird.

Für die Aktoren sind beispielsweise unterschiedliche Prioritäten vorgegeben und es werden innerhalb eines Zeitfensters die Aktoren entsprechend deren Priorität ausgelöst und die Auslösung einer die aktuelle, adaptiv angepasste maximalen Gruppengröße überschreitenden Anzahl von Aktoren in nachfolgende Zeitfenster verschoben.

Bei einer festen Gruppeneinteilung muss man sich in der Gruppengröße bzw. in der Schaltungsauslegung an dem Worst Case orientieren. Dieser ist der letzte geforderte Zeitpunkt am Autarkiezeitende (bei Batterieabriss), da hier vor der Auslösung die Energiereserve bereits durch Schaltungsbetrieb als auch vorhergehende Auslösung von Gruppen teilweise entladen ist.

Die Adaption der maximalen Gruppengröße ist also nur ein grobes Raster für die Anpassung der Auslösung und müssen weiterhin die Komponenten der Schaltung auf eine möglichst große maximale Gruppengröße ausgelegt werden. Bei der zunehmenden Anzahl von Aktoren und der geforderten Autarkiezeit erhöhen sich damit die erforderliche Größe und damit neben Bauraum vor allem Kosten für den bzw. die Autarkiekondensatoren.

Die Aufgabe der vorliegenden Erfindung ist es daher, die Auslösung weiter zu optimieren. Diese Aufgabe wird durch die Merkmale der unabhängigen Ansprüche gelöst. Vorteilhafte Weiterbildungen der Erfindung ergeben sich aus den Unteransprüchen, wobei auch Kombinationen und Weiterbildungen einzelner Merkmale miteinander denkbar sind.

Ein wesentlicher Gedanke der Erfindung besteht darin, dass die im Falle einer Zerstörung des Bordnetzes für alle noch verbleibenden Auslösezeitfenster jeweils die aktuell tatsächlich (noch) zur Verfügung stehende Energiemenge im zumindest einen Autarkiekondensator gemessen oder abgeschätzt wird. Anhand dieser Energiemenge wird geprüft, ob alle in diesem jeweiligen noch verbleibenden Auslösezeitfenster zur Auslösung vorgesehenen Aktoren ausgelöst werden können. Falls ja, werden diese natürlich ausgelöst. Im Gegensatz zu einer festen maximalen Gruppengröße kann so eine Anpassung auf die je verfügbare Energiemenge maximale Anzahl von Aktoren ausgelöst werden, d.h. die Energiemenge optimal genutzt werden.

Falls die Energiemenge nicht ausreicht, werden anhand einer vorgegebenen Regel diejenigen Aktoren aus den eigentlich in diesem Auslösezeitfenster zur Auslösung in diesem vorgesehenen Aktoren ausgewählt, welche in diesem jeweiligen noch verbleibenden Auslösezeitfenster mit der in diesem Auslösezeitfenster aktuell zur Verfügung stehenden Energiemenge tatsächlich ausgelöst werden können. Zwar verwendet auch die DE 19917340 C1 eine solche Prioritätsregel, wird dort aber die Auslösung für die restlichen Aktoren endgültig unterbunden. Im vorliegenden Verfahren jedoch wird die Auslösung der restlichen zur Auslösung in diesem Auslösezeitfenster vorgesehenen Aktoren in das bzw. die folgenden Auslösezeitfenster verschoben, d.h. in der Regel nur geringfügig verzögert dennoch ausgelöst.

Vorzugsweise werden die Schritte für alle noch verbleibenden Auslösezeitfenster wiederholt. In einer besonders bevorzugten Ausgestaltung aber nur dann, sofern nicht zuvor die dann aktuell noch verfügbare Energiemenge nicht mehr für die Auslösung zumindest eines Aktors ausreicht.

In einer besonders bevorzugten Ausgestaltung wird die aktuell zur Verfügung stehende Energiemenge ermittelt, indem die Spannung über dem zumindest einen Autarkiekondensator gemessen wird. Dies erfolgt vorzugsweise zyklisch, bspw. unmittelbar vor dem jeweiligen Auslösezeitfenster. Dies hat den Vorteil, dass weder die Zeitdauer seit Zerstörung des Bordnetzes noch die bereits gezündeten Aktoren berücksichtigt werden müssen.

In einem anderen Ausführungsbeispiel soll die Messung jedoch vermieden werden, kann aber die aktuell zur Verfügung stehende Energiemenge zumindest abgeschätzt werden, indem mittels eines Zeittaktes die Zeitdauer seit der Zerstörung des Bordnetzes erfasst wird und dem eine zur Verfügung stehende reduzierte Energiemenge zugeordnet wird.

Zudem ist vorzugsweise zumindest eine Entladekennlinie für die seit Zerstörung des Bordnetzes ausgelösten Aktoren vorgegeben, können aber auch für Gruppen oder jeden der Aktoren einzeln entsprechende Entladekurven vorgegeben sein. Da aktuell die Aktoren aber in der Regel eine normierte Energieaufnahme aufweisen, kann eine einfache Zählung dieser erfolgen und aus der Anzahl seit Zerstörung des Bordnetzes bereits gezündeten Aktoren auf die verbleibende Energiemenge geschlossen werden.

Entsprechend wird ein Steuergerät für ein Sicherheitssystem zum Auslösen einer Mehrzahl von Aktoren mit Mitteln zur Durchführung des entsprechenden Verfahrens ausgestattet, insbesondere mit einem Speicher mit einem entsprechenden Algorithmus zur Ausführung auf einem Mikroprozessor des Steuergeräts.

Die Beschaltung wird dabei in der bevorzugten Ausgestaltung so ausgelegt, dass bei normalen Umgebungsbedingungen (Batteriespannung vorhanden) das Auslösen von bis zu n=max Gruppengröße Zündmitteln zeitgleich gewährleistet ist. Befindet sich das Steuergerät jedoch im autarken Modus, können zwar weniger als n Zündmittel zeitgleich gezündet werden - die Auslösung dieser Rückhaltemittel ggfs. zu einem späteren Auslösezeitfenster wird aber trotzdem gewährleistet. Indem die verfügbare Energiemenge bestimmt wird, kann daraufhin die ideale Gruppengröße für die anstehende Auslösung festgelegt werden. Die Energiemenge wird im autarken Mode nämlich mit steigender Zeit einerseits und bereits erfolgten Auslösungen andererseits natürlich immer weniger.

Folgende Bestimmungsmethoden wären unter anderem denkbar:
a) "Lineare Näherung", d.h. konstante Abnahme der Energie über die (Autarkie-)Zeit
b) "Kennlinie", d.h. Abnahme-Kurve der Energie über die (Autarkie-)Zeit
c) "Adaptiv", d.h. Messung der Kondensator-Spannung zur Abschätzung der aktuell tatsächlich noch vorhandenen Energiemenge, vorzugsweise zu jedem Auslösezeitfenster, d.h. vorzugsweise jeweils vor diesem.

Dadurch wird das Auslöseverhalten unter Normalbedingungen nicht von der reduzierten Performanz während autarkem Mode beeinflusst, während im autarkem Mode durch eine energieoptimierte Gruppenbildung immer die zu dieser Zeit beste Auslöseperformanz gewählt wird.

Anwendungen, die bei bestimmten Bedingungen nur eingeschränkt funktionieren, können mit dem Wissen der verfügbaren Energiemenge diese ideal ausnutzen.

Erste Bewertungen zeigen, dass gegenüber einem herkömmlichen System unter Anwendung dieses Verfahrens mit einem um 20 bis 30% kleineren Autarkiekondensator immer noch selbst bei einer extrem unwahrscheinlichen Zerstörung des Bordnetzes vor der ersten Auslösung noch die Auslösung aller Aktoren gewährleistet werden kann. Einzig deren Auslösezeitpunkte werden ggfs. in spätere Auslösezeitfenster verschoben, entspricht dies aber eben einer Notbetriebssituation und kann durch die Prioritätsregeln auch in diesem Fall noch ein hinreichend sicheres Auslöseverhalten gewährleistet werden, die erforderlichen Gesamtkosten aufgrund des kleineren Autarkiekondensators und damit auch kleineren Bauraums deutlich gesenkt werden.

## Patentansprüche

1. Verfahren zum Auslösen einer Mehrzahl von Aktoren eines Sicherheitssystems eines Kraftfahrzeugs aus einer Energiequelle, wobei anhand von Sensorsignalen das Erfordernis zur Auslösung und ein jeweils gewünschtes Auslösezeitfenster für den jeweiligen Aktor bestimmt werden,
a) wobei als Energiequelle ein Bordnetz und zudem zumindest ein Autarkiekondensator vorgesehen sind, wobei der bzw. die Autarkiekondensator(en) aus dem Bordnetz aufgeladen werden
b) und im Falle einer Zerstörung des Bordnetzes die Auslösung so angepasst wird, dass zumindest noch ein Teil der zur Auslösung vorgesehenen Aktoren ausgelöst werden, **dadurch gekennzeichnet, dass**
c) die im Falle einer Zerstörung des Bordnetzes für alle noch verbleibenden Auslösezeitfenster jeweils die aktuell zur Verfügung stehende Energiemenge im zumindest einen Autarkiekondensator gemessen oder abgeschätzt wird und
d) anhand der Energiemenge geprüft wird, ob alle in diesem jeweiligen noch verbleibenden Auslösezeitfenster zur Auslösung vorgesehenen Aktoren ausgelöst werden können und
d1) falls ja, diese ausgelöst werden,
d2) falls nicht, anhand einer vorgegebenen Regel diejenigen Aktoren aus den eigentlich in diesem jeweiligen noch verbleibenden Auslösezeitfenster zur Auslösung vorgesehenen Aktoren ausgewählt werden, welche in diesem jeweiligen noch verbleibenden Auslösezeitfenster mit der in diesem jeweiligen noch verbleibenden Auslösezeitfenster aktuell zur Verfügung stehende Energiemenge tatsächlich ausgelöst werden können und die Auslösung der restlichen zur Auslösung in diesem jeweiligen noch verbleibenden Auslösezeitfenster vorgesehenen Aktoren in das oder die folgenden Auslösezeitfenster verschoben werden.

2. Verfahren nach Anspruch 1, **dadurch gekennzeichnet, dass** die aktuell zur Verfügung stehende Energiemenge als Spannung über dem zumindest einen Autarkiekondensator gemessen wird.

3. Verfahren nach Anspruch 1, **dadurch gekennzeichnet, dass** die aktuell zur Verfügung stehende Energiemenge mittels eines Zeittaktes aus der Zeitdauer seit der Zerstörung des Bordnetzes abgeschätzt wird.

4. Verfahren nach Anspruch 3, **dadurch gekennzeichnet, dass** zumindest eine Entladekennlinie für die seit Zerstörung des Bordnetzes ausgelösten Aktoren vorgegeben ist.

5. Steuergerät für ein Sicherheitssystem zum Auslösen einer Mehrzahl von Aktoren mit Mitteln zur Durchführung des Verfahrens nach einem der vorangehenden Ansprüche umfassend einen Speicher mit einem entsprechenden Algorithmus, der zur Ausführung auf einem Mikroprozessor des Steuergeräts vorgesehen ist.

## Claims

1. A method for triggering a plurality of actuators of a safety system of a motor vehicle from an energy source, wherein, by using sensor signals, the requirement for triggering and a respectively desired triggering time period are determined for the respective actuator,
a) wherein an on-board power supply and, in addition, at least one autarky capacitor are provided as the energy source, wherein the autarky capacitor or respectively the autarky capacitors is/are charged up from the on-board power supply,
b) and in the event of a destruction of the on-board power supply the triggering is adjusted such that at least a portion of the actuators provided for triggering are still triggered,
**characterized in that**
c) in the event of a destruction of the on-board power supply, the currently available energy quantity in the at least one autarky capacitor is in each case measured or estimated for all of the remaining triggering time periods, and
d) it is checked by using the energy quantity whether all of the actuators provided for triggering in this respective remaining triggering time period can be triggered, and
d1) if yes, these are triggered,
d2) if not, by using a predefined rule, those actuators are selected from the actuators actually provided for triggering in this respective remaining triggering time period which can actually be triggered in this respective remaining triggering time period with the currently available energy quantity in this respective remaining triggering time period, and the triggering of the residual actuators provided for triggering in this respective remaining triggering time period is displaced into the following triggering time period(s).

2. The method according to Claim 1, **characterized in that** the currently available energy quantity is measured as a voltage over the at least one autarky capacitor.

3. The method according to Claim 1, **characterized in that** the currently available energy quantity is estimated by means of a time interval from the period of time since the destruction of the on-board power supply.

4. The method according to Claim 3, **characterized in that** at least one discharge characteristic curve is predefined for the actuators triggered since the destruction of the on-board power supply.

5. A control unit for a safety system for triggering a plurality of actuators, having means for performing the method according to any one of the preceding claims, comprising a memory with a corresponding algorithm which is provided for running on a microprocessor of the control unit.

## Revendications

1. Procédé de déclenchement d'une multiplicité d'actionneurs d'un système de sécurité d'un véhicule à moteur à partir d'une source d'énergie, la nécessité du déclenchement et une fenêtre temporelle de déclenchement respectivement souhaitée étant déterminés à l'aide de signaux de capteurs pour l'actionneur respectif,
a) un réseau de bord et en outre au moins un condensateur d'autarcie étant prévus comme source d'énergie, le ou les condensateur(s) d'autarcie étant chargé(s) à partir du réseau de bord
b) et, en cas de destruction du réseau de bord, le déclenchement étant ajusté de telle sorte qu'au moins encore une partie des actionneurs dont le déclenchement est prévu sont déclenchés,
**caractérisé en ce que**,
c) en cas de destruction du réseau de bord, la quantité d'énergie actuellement disponible dans l'au moins un condensateur d'autarcie est respectivement mesurée ou estimée, pour toutes les fenêtre temporelle de déclenchement restantes, et
d) le fait de savoir si tous les actionneurs dont le déclenchement est prévu dans cette fenêtre temporelle de déclenchement respective encore restante peuvent être déclenchés est vérifié à l'aide de la quantité d'énergie, et
d1) dans l'affirmative, ceux-ci sont déclenchés,
d2) dans la négative, les actionneurs parmi les actionneurs dont le déclenchement est en fait prévu dans cette fenêtre temporelle de déclenchement respective encore restante sont sélectionnés à l'aide d'une règle spécifiée, lesquels actionneurs peuvent effectivement être déclenchés dans cette fenêtre temporelle de déclenchement respectivement encore restante avec la quantité d'énergie actuellement disponible dans cette fenêtre temporelle de déclenchement respectivement encore restante et le déclenchement des actionneurs restants dont le déclenchement est prévu dans cette fenêtre temporelle de déclenchement respectivement encore restante est repoussé à la ou aux fenêtre(s) temporelle(s) de déclenchement suivantes.

2. Procédé selon la revendication 1, **caractérisé en ce que** la quantité d'énergie actuellement disponible est mesurée comme une tension par le biais de l'au moins un condensateur d'autarcie.

3. Procédé selon la revendication 1, **caractérisé en ce que** la quantité d'énergie actuellement disponible est estimée au moyen d'un signal d'horloge à l'aide de la durée temporelle depuis la destruction du réseau de bord.

4. Procédé selon la revendication 3, **caractérisé en ce qu'**au moins une courbe caractéristique de décharge est spécifiée pour les actionneurs déclenchés depuis la destruction du réseau de bord.

5. Appareil de commande pour un système de sécurité pour le déclenchement d'une multiplicité d'actionneurs avec des moyens pour l'exécution du procédé selon l'une des revendications précédentes, comprenant une mémoire avec un algorithme correspondant, lequel est prévu pour l'exécution sur un microprocesseur de l'appareil de commande.
